(19) Europäisches Patentamt

European Patent Office

Office européen des brevets

(11) **EP 2 577 359 B1**

(12) **EUROPEAN PATENT SPECIFICATION**

(45) Date of publication and mention
of the grant of the patent:
**06.05.2020  Bulletin 2020/19**

(21) Application number: **11721784.4**

(22) Date of filing: **27.05.2011**

(51) Int Cl.:
***G01V 1/48*** *(2006.01)*

(86) International application number:
**PCT/EP2011/058743**

(87) International publication number:
**WO 2011/147970 (01.12.2011 Gazette 2011/48)**

(54) **METHOD AND SYSTEM FOR DETERMINING THE RIGIDITY OF A GEOLOGICAL LAYER**

VERFAHREN UND SYSTEM ZUR BESTIMMUNG DER RIGIDITÄT EINER GEOLOGISCHEN SCHICHT

PROCÉDÉ ET SYSTÈME PERMETTANT LA DÉTERMINATION DE LA RIGIDITÉ D'UNE COUCHE GÉOLOGIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority:  **28.05.2010  EP 10425184**

(43) Date of publication of application:
**10.04.2013  Bulletin 2013/15**

(73) Proprietor: **THUR S.R.L.**
**37122 Verona (IT)**

(72) Inventors:
• **MULARGIA, Francesco**
**40121 Bologna (IT)**
• **CASTELLARO, Silvia**
**30174 Venezia (IT)**

• **PASTOR, Mariapia**
**37021 Bosco Chiesanuova (VR) (IT)**
• **VINCO, Gianluca**
**37023 Grezzana (VR) (IT)**

(74) Representative: **Perani & Partners S.p.A.**
**Piazza Armando Diaz, 7**
**20123 Milano (IT)**

(56) References cited:
**WO-A1-2008/154640      WO-A2-2004/019063
US-A- 6 094 401        US-A1- 2004 226 380**

• **PARK CHOON B ET AL: "Multichannel analysis
of surface waves", GEOPHYSICS, SOCIETY OF
EXPLORATION GEOPHYSICISTS, US, vol. 64, no.
3, 1 May 1999 (1999-05-01), pages 800-808,
XP002466095, ISSN: 0016-8033, DOI:
DOI:10.1190/1.1444590 cited in the application**

**Description**

The present invention refers to a method and to a system for determining the rigidity of a geological layer underlying another geological layer, which is preferably a surface layer delimited at the upper part by a free surface. In particular, the invention refers to a method and system for determining the rigidity of a geological underlying a more rigid surface layer.

The measurement of the elastic properties, and in particular the rigidity, $\mu$, of the geological layers on which building foundations and generally building structures lie or into which they are submerged, may have various applications, among which the evaluation of the stability of the subsoil and thus the risk of collapse or permanent deformation of a building structure in the long term and/or in the case of a seismic event.

The classification of foundation subsoils according to the NEHRP (USA), Eurocode 8 (Europe) and NTC2008 (Italy) standards for designing seismic-resistant structures is mainly based on the velocity of the shear waves of a homogeneous layer equivalent to the first thirty metres of depth, $V_{s30}$. The velocities of the shear waves, $V_s$, is actually directly related to the rigidity of the material that forms the geological layer through the equation

$$\mu = \rho V_s^2, \qquad\qquad (1)$$

where $\rho$ is the density of the layer.

An application of the measurement of the velocity of the elastic waves in the subsoil is the evaluation of the efficiency of the interventions for consolidating the subsoil beneath existent foundations, aimed at improving the elastic parameters, such as the Young's modulus and the rigidity modulus.

Indirect techniques, based on surface measurements, i.e. neither inserting detector elements into the subsoil nor extracting samples from the subsoil and measuring their properties in a laboratory, are often used for measuring the velocity of the elastic waves. Typically, indirect techniques are of seismic type, i.e. they are based on the analysis of the seismic waves produced by an artificial source.

Conventional approaches for measuring the velocity of the seismic shear waves require a relatively high number of sensors, with ensuing increase of costs and the spaces required for the deployment as well as practical difficulties for their use in urban environments.

Furthermore, the use of the conventional method of seismic prospection and i.e. generating - by means of suitable apparatus - longitudinal P and transverse S body waves and recording their refraction by the geological layers, with the ensuing identification and measurement of the elastic properties of the latter, is inefficient. As a matter of fact, the physical law which governs refraction at an interface between two layers is the Snell's law

$$sin\ i\ /\ sin\ r = V1/V2\ , \qquad\qquad (2)$$

according to which the ratio between the sine of the angle of incidence i and the sine of the angle of refraction r is equal to the ratio between the velocity in the first and in the second layer. If the source and the detector elements are positioned on the surface and the velocity of the underlying layer is greater, i.e. $V_1 < V_2$ , upon reaching the critical angle of incidence according to which *sin r* = 90°, the refracted wave travels parallel to the interface between the two layers and may be re-refracted in the surface layer, thus allowing to measure the velocities and the thicknesses of both layers. However, as it typically occurs in case of sub-foundation layers, if $V_i > V_2$, the body wave is not refracted parallel to the interface and shall not be re-refracted in the surface layer. Hence, it is impossible to measure, by detecting the refracted body waves, the velocity and the thickness of the underlying layer, which remains invisible and is referred to as a "ghost layer".

Methods for exploring the subsoil based on the study of the dispersion of elastic surface waves have been developed recently. These allow using a lower number of sensors while maintaining the same accuracy. In general, the exploration depth of the surface waves is directly proportional to the wavelength: see e.g., C.B. Park et al. in "Multi-channel analysis of surface waves (MASW) " published in Geophysics, vol. 64, p. 800-808. 1999, who describe a multi-channel technique of surface wave analysis for determining the velocity profile of the shear waves.US 2004/226380 relates to a device and a method for measuring the stiffness of base and sub-grade layers of soil by means of a pair of parallel spaced apart cone penetrometers. The penetrometers are pressed in the ground, one of them being provided with piezoelectric transmitters, from which shear and primary waves are triggered by wave generator means. Waves propagate through the soil to a pair of receivers positioned at the same depth of the transmitters. The two penetrometers shafts are placed close to one another, namely at a fixed distance of about 20 cm. WO 2004/019063 relates to a method of estimating the near surface weathering and sub weathering layer boundaries and the seismic velocities therein by the use of seismic waves emanating from a working drill bit in a well in a technique known as "seismic while drilling" or SWD. US 6 094 401 describes a reverse vertical seismic profiling (VSP) system utilising an MWD (measurement while drilling) tool as downhole seismic source capable of generating a sweep of frequencies. A frequencycontrollable modulator is used to provide a large force to the drill bit that is in contact with the formation by generating axial compressional (P-) waves. Since the bit can be in contact with the sidewalls of the borehole, it is said that the force generated by the modulator may also provide measureable transverse shear (S-) waves. WO 2008/154640 discloses a method for obtained enhanced seismic data and optimised inverted reflectivities by using well control data to improve the quality of seismic processing and amplitude inversion.

In case of analysis techniques of surface waves, the source is an apparatus which generates both P waves and S waves. The interaction between these two types of waves in proximity to a surface gives rise, at a given distance from the source, to surface waves. Energisation is typically actuated by means of a hammer which hits - once or several times - metal plates coupled to the surface of the ground to be explored. In this manner, wavefronts are generated which propagate through the underlying ground.

Generally, the surface layer comprising the foundations of a building structure, indicated hereinafter also as foundation layer, typically has a rigidity greater than the rigidity of the underlying layer, which may be of different type (e.g. clay soil, sandy soil, etc).

The applicant observed that when investigating the elastic properties of a geological layer beneath the foundations, if the source is located on the surface of the ground to be explored, the energy developed by the source remains mostly trapped in the surface layer which serves as a waveguide for the elastic waves, due to the relatively high difference in seismic impedance between the two layers. Actually, through the interface between the surface layer and the underlying layer, only a fraction k of the incident energy is transmitted, while the remaining energy (1-$k$) is reflected. Calculating the value of the energy trapped in the layer and transmitted in terms of surface waves is generally complex and depends on the specific geometry of the problem. In first approximation, if the difference between the rigidity - i.e. the products of density by velocity squared, according to relation (1) - of the two layers is large only a small amount of energy is transmitted into the underlying layer and is available to explore it. The waves transmitted in the underlying layer are then retransmitted into surface, but the their energy is reduced at the interface between the two layers by a further factor of the order of k. In conclusion, by generating at the surface the waves to explore the underlying layer, and recording them at the surface, the energy of the waves that return to the surface after exploring the underlying layer is - in first approximation - reduced by a factor $k^2$. For example, a typical value of $k$ is 0.2, thus the waves that have explored the underlying layer return to the surface with energy in the order of 0.04 and their identification among the waves that are trapped for reflection in the first layer (whose energy is much higher, in the order of 0.8) is practically impossible. Hence, the identification of the surface waves associated to the lower layer in the detected seismic traces and the measurement thereof are extremely difficult.

In the analysis of surface waves, the interaction between the P and S body waves gives rise of the surface waves. To analyse those waves, therefore both P and S waves therefore are to be generated simultaneously.

The Applicant has realised that if the active generator source of primary waves is positioned in the underlying layer whose rigidity is intended to be measured, the energy generated in the underlying layer is mostly available for characterizing the layer itself and is transmitted to the overlying layer solely after having "explored" the underlying one.

In particular, in case of energization in the underlying layer and in presence of an interface between two layers with different elastic properties with respect to each other (for example between two geological layers with different rigidity such as the foundation layer and the underlying layer), most of the energy is "trapped" in the underlying layer and it is represented by interface waves. These waves, called Stoneley waves, are entirely similar to Rayleigh surface waves and they propagate beneath the interface with the overlying layer with a simultaneously vertical and horizontal oscillation motion. Due to the continuity of displacements across the interface, the Stoneley waves extend also into the upper layer, exciting - by continuity - both the horizontal and vertical motions, but exponentially attenuating when moving away from the interface itself. More specifically, the waves whose frequency coincides with one of the vibration modes of the Rayleigh waves and of the Love waves in the overlying layer shall be the least attenuated among the transmitted waves. The latter shall appear on the surface with more energy. In any case, given that only a fraction of energy is transmitted to the interface, to be detected on the surface, they should be generated with enough energy to be recorded. In particular, the detected waves are those that return to the surface after having explored the lower layer and having crossed the interface between lower and upper layer.

The Applicant has understood that by positioning the source of seismic waves in the layer whose rigidity is intended to be measured it is possible to detect at the surface the Stoneley waves, that occur at the surface as Rayleigh and Love surface waves modes. In particular, the Stoneley waves appear at the surface as higher modes of surface waves of Rayleigh and Love.

In an aspect, the present invention refers to a method according to claim 1 for determining the rigidity of a geological layer in terms of propagation velocity of the elastic waves within a geological system delimited by a free surface and comprising at least one first geological layer having a first rigidity and a second geological layer having a second rigidity and being arranged below the first geological layer, said first and second layer being separated from each other by an interface, the method comprising the steps of:

- positioning a source apt to generate seismic waves within the second geological layer, whose rigidity is intended to be measured, at a depth between 0.1 m and 2 m from the interface;
- activating said source of seismic waves;
- detecting at least one seismic signal by means of at least one sensor arranged coupled with the free surface, and
- determining from at least one seismic signal a shear velocity of the elastic waves in the second layer and thus indicative of the rigidity of the second layer.

Preferably, in the method, the step of determining a shear velocity of the elastic waves in the second layer comprises the following steps:

- determining from at least one seismic signal the propagation velocity of surface waves caused by the seismic waves generated by said source;
- determining a map of said propagation velocities of the surface waves as a function of the frequency thereof;
- identifying, in the velocities map, a propagation velocity whose frequency is correlated to a depth in the geological system, and
- correlating at least one propagation velocity identified in the velocities map to a shear velocity of the elastic waves in the second layer and thus indicative of the rigidity of the second layer.

The method comprises the step of calculating the rigidity from the shear velocity of the elastic waves in the second layer.

The rigidity value of the first layer is greater than the rigidity value of the second layer.

The first geological layer is delimited by the free surface and comprises the foundations of a building structure.

Preferably, the first layer has a thickness and the source is positioned at a depth with respect to the free surface larger than the thickness of the first layer.

Preferably, the source of seismic signal is an impulsive source suitable to generate body waves.

In the method according to the invention, the step of detecting at least one seismic signal comprises detecting a plurality of seismic signals and it is obtained by means of an array of sensors comprising a plurality of sensors arranged coupled with the free surface, each sensor being apt to detect a seismic signal of the plurality of seismic signals. Preferably, the surface waves whose propagation velocity is detected are detected through a multichannel technique.

Preferably, the step of detecting at least one seismic signal comprises detecting a signal as a function of the time during a period of acquisition and the step of determining a map of the propagation velocity of the surface waves comprises performing a transformation of the seismic signal from the time domain to the frequency domain..

In a further aspect, the present invention refers to a system according to claim 9 for determining the rigidity of a geological layer in terms of propagation velocity of the elastic waves within a geological system delimited by a free surface and comprising at least one first geological layer having a first rigidity and a second geological layer having a second rigidity and being arranged below the first geological layer, said layers being separated from each other by an interface, the system comprising

a source suitable to generate seismic waves;

at least one seismic signal sensor arranged coupled with the free surface, and

an electronic unit for acquiring seismic signals detected by the at least one sensor, wherein said source is positioned in the second geological layer.

Preferably, the at least one seismic signal sensor is an array of seismic signal sensors comprising a plurality of sensors, the plurality including a first and a last sensor, arranged coupled with the free surface at a predetermined spacing form each other. Preferably, the sensors are aligned along an alignment direction and the source is positioned at a predetermined distance from the first sensor of the linear array of sensors, defined along the alignment direction.

The source is positioned in the second layer at a depth comprised between 0.1 m and 2.0 m from the interface con the first layer.

Preferably, the source of seismic waves is energized by a depth seismic gun.

The present invention shall be described hereinafter more in detail with reference to the attached drawings, in which some but not all the embodiments are shown. The drawings illustrating the embodiments are schematic representations.

- figure 1 represents a planar view illustrating an exemplifying arrangement of an array of sensors apt to measure the elastic properties of the subsoil beneath and/or in proximity to a building, according to an embodiment of the invention.
- figure 2 represents a first cross section of figure 1 along line AA.

- figure 3 represents a second cross section of figure 1 along line BB. With the aim of improving clarity, the representation of the building 1 is omitted in the figure.
- figure 4 schematically shows the structure of a seismic gun which can be used for the implementation of the method according to the present invention.
- figure 5 is an example of an image of the phase velocity of the surface waves (Love) as a function of the frequency in a situation prior to the intervention of consolidating the layer underlying the foundations.
- figure 6 is an example of an image of the phase velocity of the surface waves (Love) as a function of the frequency in a situation subsequent to the intervention of consolidating the layer underlying the foundations.

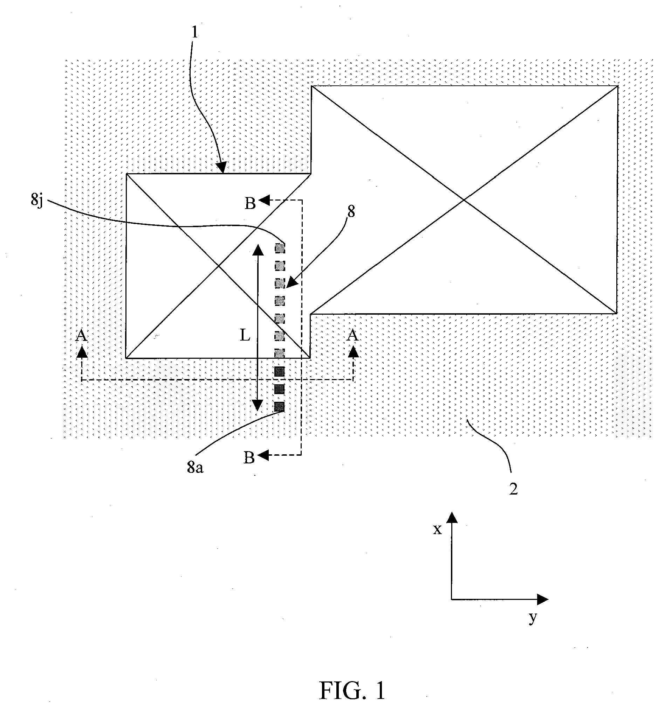

Referring to figures 1 to 3, in a preferred embodiment, the present invention refers to a method and to a system for measuring the rigidity of a geological layer positioned beneath the foundations of buildings and building structures in general, which constitute or are included in a surface layer delimited at the upper part by the free surface of the ground and indicated as foundation layer. The characterisation of the geological layers according to the method and system according to the present preferred embodiment may be performed both before a ground consolidation intervention and after the intervention with the aim of evaluating the effectiveness of intervention itself.

In the first approximation, it is possible to describe the subsoil as a stratified medium wherein the main variation of the composition and of the mechanical properties occurs along the depth, while the variation in the two horizontal directions is negligible. In this context and according to a non-limiting convention of the present invention, the layers are defined starting from the surface: the first layer shall be the surface one, the second shall be the underlying one and so on and so forth.

The method according to a particular aspect of the present invention is apt to measure the velocity of the elastic waves in a geological system comprising at least one first layer of the subsoil 6 and a second geological layer 5 underlying with respect thereto. The first layer is that whose upper surface is the free surface 2. The interface between the upper layer (first) 6 and the lower layer (second) 5 is indicated with reference number 3.

In the embodiment illustrated in figures 1-3, the first geological layer 6 is a foundation layer comprising the foundations of a building structure, for example a residential building 1.

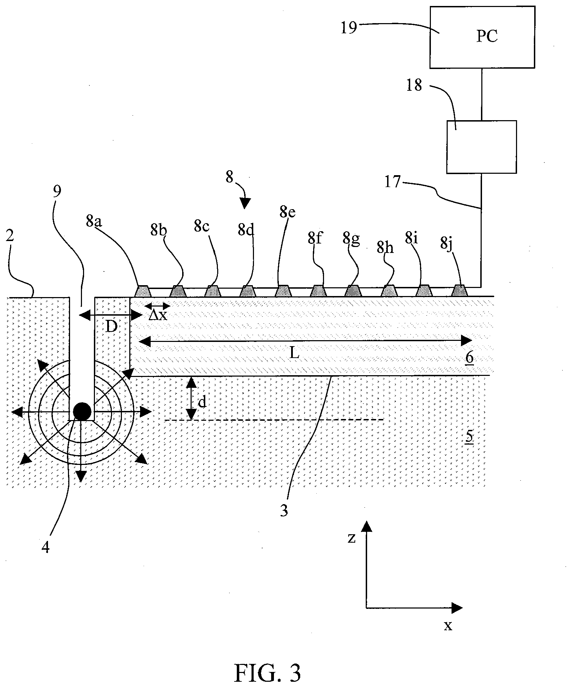

The system for measuring the elastic waves which are propagated in the geological system comprises a source 4 (shown in figure 3) apt to generate elastic body waves and an array of sensors 8 comprising a plurality of sensors 8a, 8b, ..,8j, each of which being apt to detect elastic surface waves which propagate along the free surface 2 of the ground. Preferably, the array of sensors is a linear array in which the sensors are arranged in line at a given spacing between a sensor and the next adjacent sensor (figure 3). In the example illustrated in figures 1-3 the array of sensors is constituted by ten sensors with constant spacing $\Delta x$.

However, the number of sensors comprised in the illustrated array shall not be deemed to be limitative of the present invention, such number being selected depending on the applications, for example as a function of the length of the area to be explored, as described further in detail hereinafter. In this context, a plurality of sensors is to be intended comprising at least two sensors, preferably between 4 and 12 sensors.

In a different embodiment, the spacing between the sensors may be of a different value from one sensor to another sensor or generally be non-constant.

According to a main aspect of the preferred embodiments of the present invention, the method is apt to measure the surface waves produced by primary and secondary waves generated by a source located within a second geological layer underlying a first geological layer, the source being positioned at a predetermined depth greater than the thickness of the first layer, e.g. the foundation layer. In particular, the method is apt to measure, at the surface, the surface waves produced by the Stoneley interface waves.

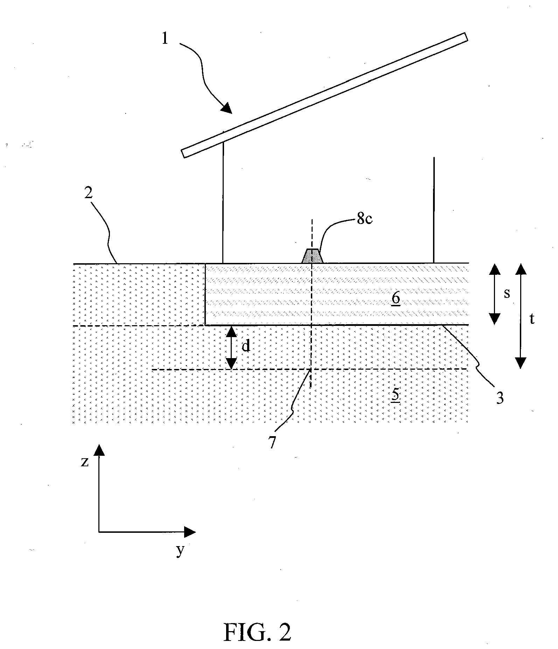

Referring to figures 1-3 and called s the thickness of the first layer 6 (figure 2, along the z-axis), the source is located at a depth $t > s$. In a preferred embodiment, the distance d from the interface 3 between the first and the second geological layer, i.e. $d = t-s$, is comprised between 0.5 m and 1.5 m.

Preferably, the source is an impulsive seismic source and comprises at least one explosive charge with initial velocity comprised between 300 and 700 m/s. In a preferred embodiment, the source comprises an explosive charge with an initial velocity of 500 m/s and insertion time < 1ms.

In some embodiments, the source 4 is positioned at a depth t, greater than the thickness s of the foundation layer, within a hole 9 (indicated in figure 3) which extends from the free surface through the geological system. In figure 2, the position of the source 4 along the z-axis (depth) is indicated with 7.

The source is apt to generate interface and surface seismic waves.

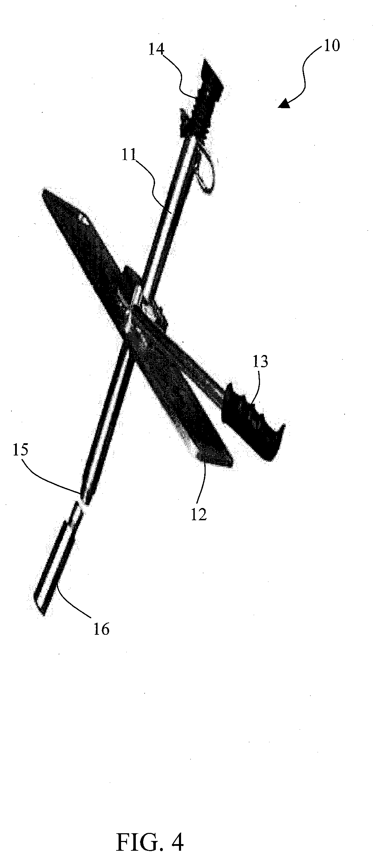

In a preferred embodiment, the energization of the source is provided by means of a depth seismic gun, schematically illustrated in figure 4 and indicated in its entirety with reference number 10. The seismic gun has been particularly designed to operate at a greater depth than normal seismic guns. The depth seismic gun comprises a barrel 11, of length suitable to reach the depth t, the barrel being inserted into the ground, inside the lower geological layer (or reaching the lower layer), into a previously made hole (e.g. hole 9 in figure 3). For example, the length of the barrel 11 of the seismic gun is at least 2 metres long, for example comprised between 2 and 3 metres, so as to be able to position and detonate the explosive charge, i.e. a cartridge, inside the underlying layer. The gun comprises a plate 12 for laying on the ground surface, a support knob 13 and a trigger knob 14. The end 15 of the barrel 11 is engaged to a removable explosion chamber 16, with open bottom, into which the cartridge of the industrial type, per se known and available in the market, is inserted. The explosion of the cartridge may be performed by the free surface, by operating on the trigger knob 14 which mechanically hits an ignitor (not shown in the figure), generating the explosion of the cartridge, by means of a device (not shown in the figure) extending along the barrel 11.

Preferably, the sensors of the array of sensors 8 are geophones, i.e. elastic waves electromechanical transducers.

The signal of each geophone 8a, ...., 8j is recorded separately but synchronously on the different geophones. A relation between the wavelength and the thickness of the explored layer holds for the surface waves and for the layer waves. Generally, the components with large wavelength, $\lambda$, provide information regarding layers with greater depths, while components with small wavelength $\lambda$ provide information regarding layers closer to the surface. The relation:

$$V = \lambda \cdot f \qquad (3)$$

holds, where V is the velocity of the waves and f the frequency thereof. Considering the same velocity, the components with large wavelength $\lambda$ are the low frequency ones and those with small wavelength $\lambda$ are the high frequency ones.

Preferably, each sensor 8a, 8b, ..., 8j is a geophone with frequency comprised between 4 and 10 Hz. In an embodiment, the geophones 8a, .., 8j of the array 8 are horizontal motion geophones, suitable for detecting the velocity of the surface waves with transverse horizontal polarisation, i.e. Love waves. In a further embodiment the geophones are vertical motion geophones, suitable for detecting the velocity of the Rayleigh waves.

In the embodiment illustrated in the figures and with particular reference to figure 3, the measuring method comprises the generation of a shot "outside" the sensors line, i.e. the source is arranged at a predetermined distance D, defined along the direction of arrangement of the sensors (x-axis), from the nearest sensor, i.e. first sensor 8a, of the array. Preferably, with the aim of reducing or minimising the effects of the near field, D is not smaller than 5 m, more preferably it is comprised between 6 and 20 m.

Preferably, the array of sensors is linear along an aligning direction (axis x) and the source is arranged on the extension of the sensors alignment. However, in some embodiments of the present invention, the source is not arranged aligned with the array of sensors, but it is slightly displaced with respect to the aligning position in the plane (y,z), indicated with reference number 7 in figure 2.

In a further embodiment (not shown in the figures), the array of sensors is developed according to a two-dimensional geometry, such as for example according to an X, T or L-shaped arrangement. The minimum spacing between the sensors is in relation with the minimum detectable wavelength, thus with the detectable minimum depth. Preferably, the minimum spacing is comprised between 0.5 and 2 m.

In an embodiment, the sensors of the array of sensors are equally spaced from each other, with spacing $\Delta x$ between 0.5 and 2 m.

The distance between the first and the last sensor of the array, referred to as the detection length and indicated with L, represents the length of the detection coverage of the system and it is in relation with the maximum wavelength, thus with the maximum detectable depth.

The step of recording the surface waves is carried out according to the multi-channel analysis of surface waves (MASW) technique. According to this technique, the recording of the surface waves generated by the seismic source by the plurality of receivers occurs simultaneously. The sensors are typically coupled to the soil by means of rods while on floors/foundations tripods are used. Referring to figure 3, the sensors 8a, 8b,...,8j, synchronised in acquisition, are connected, through a connection line 17, to a data acquisition line 18, preferably a digital multichannel seismograph with a number of channels at least equal to the number of sensors, which may be a commercial seismograph (e.g. Rosina produced by Micromed spa). The data acquisition unit may comprise or may in turn be connected with a central processing unit 19, for example a personal computer (PC). The acquisition of seismic traces occurs starting from the exceedance of a preset threshold ("trigger", coinciding with the instant of energization of the subsoil) and it lasts for a few seconds after said event. In an embodiment, the data acquisition unit saves the data regarding a brief period preceding the exceeding of the threshold ("pre-trigger"), said period lasting a few seconds or a few fractions of a second preceding the instant when the threshold is exceeded.

During the period of data acquisition by the data acquisition unit, the seismic traces are recorded by each sensor as a function of the time, thus obtaining a plurality of amplitude/time signals, each signal being detected by the respective sensor of the array of sensors.

Phase velocity spectra of the surface waves and the respective experimental dispersion curves are obtained through a transformation from the amplitude/time domain to the wave frequency/number domain (f-k) or slowness/frequency domain (p-f), or to the velocity/frequency domain (V-f), according to the processing methods known in the MASW field technique. Such technique is generally efficient at isolating the surface waves from the body waves (P and S), the first generally constituting the main portion of the seismic trace in presence of a sufficiently far energization, e.g. of a source located sufficiently far from the sensor array. A dispersion curve is calculated by searching the maximum values of spectral power in the space f-k or p-f, so as to form a 2D image of the phase velocity of the Rayleigh and/or Love waves as a function of the frequency, which is in turn linked to the depth.

In particular and according to an embodiment, after recording the seismic traces, the step of determining the velocity of the surface waves comprises the following steps:

1) a test velocity value is hypothesised (Vi),
2) the traces to the different geophones, i.e. recorded by the different geophones, are time translated by an amount ($\Delta t$), which is determined by the ratio between the distance of each geophone from the source and the hypothesized velocity $V_i$,
3) the traces thus translated in time are summed, so as to calculate the function of correlation of all the traces,
4) a transformation of the correlated signal in the frequency domain is carried out. The spectra maxima shall indicate the frequency of the phases that have travelled at the velocity $V_i$.

Carrying out steps 1)-4) for different test velocities produces a data matrix which is represented in a two-dimensional plot frequency-$V_i$, generally represented coloured, where the colours are proportional to the power spectra under step 4). The higher the power spectral density for a given pair of velocity and frequency, the higher the energy of the waves.

The maximum values in the spectral plots indicate the velocity at the various frequencies of the different propagation modes of surface waves, i.e. fundamental or higher-order modes, excited by the Stoneley waves, which thus appear as surface waves, both Rayleigh and Love surface waves. In other words, the Stoneley waves appear at the surface as surface waves of both Rayleigh and Love type.

In practice, what happens is that the Stoneley waves, travelling in the interface between the underlying layer and the overlying one, couple with the surface waves of the same frequency, providing energy thereto. It is these surface waves with "increased energy" that are recorded in surface and provide information on the Stoneley waves and thus on the underlying layer.

The variation of the velocity as a function of the frequency is called dispersion.

In an embodiment, the step of determining a shear velocity of the elastic waves in the second layer comprises the following steps:

- determining from at least one seismic signal the propagation velocity of the Rayleigh and Love surface waves coupled to the interface (Stoneley) waves, the surface and interface waves being caused by the seismic waves generated by the source;
- determining a map of said propagation velocities of the surface and interface waves as a function of their frequency;
- identifying, in the velocities map, a propagation velocity whose frequency is correlated to a depth in the geological system, and
- correlating at least one propagation velocity identified in the velocities map to a shear velocity of the elastic waves in the second layer and thus indicative of the rigidity of the second layer.

In an embodiment, the at least one seismic signal comprises detecting a plurality of seismic signals and it is obtained by means of an array of sensors comprising a plurality of sensors arranged coupled with the free surface, each sensor being apt to detect a seismic signal of the plurality of seismic signals and the step of detecting the plurality of seismic signals comprises positioning the array of sensors on the free surface and the step of determining the propagation velocity comprises determining, from the plurality of seismic signals, the propagation velocity of Rayleigh and Love surface waves coupled to the interface Stoneley waves.

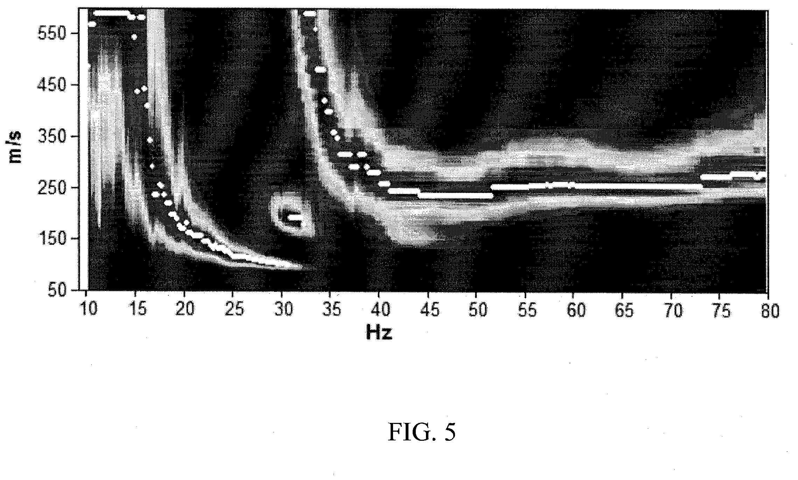

Figure 5 is an exemplifying image of experimental dispersion, in the phase frequency-velocity domain, obtained from the analysis of the seismic traces measured in a geological system of two layers, in which the upper layer is constituted by the foundations and has a thickness s of 1.3 m. The conditions of the experiment to which figure 5 refers were: an array of 10 horizontal component geophones with a vibrational frequency of 4.5 Hz arranged at a constant distance of 0.9 m from each other; an active source comprising a calibre 8 seismic gun with exploding industrial cartridge which develops a pressure of about 1700 bars and an initial gas velocity of 500 m/s, in which the cartridge was exploded at a depth t of about 2 m and a distance D of 15 m from the first geophone of the array; the sampling of the signals was performed at a frequency of 1024 Hz.

In figure 5, two distinct high energy regions are visible (in the grey scale, the greater energy corresponds to a lighter tonality), which are substantially attributable to two dominant modes of propagation of the surface waves, Love waves in this case: a first low frequency region extended from about 20 to 30 Hz (where there is a high density of maximum energy points, represented by white circles) and a second high frequency region which is extended approximately from 35 to 80 Hz. From the maximum energy points in each region there follows the identification of dispersion curves which indicate at what phase velocity the maximum transport of energy of the Love waves occurs as a function of frequency and thus of the explored depth. In particular, the first region is attributable to a first mode of the Love waves with a phase velocity of about 150 m/s and the second region is attributable to a second Love mode with a phase velocity of about 300 m/s.

After the detection reported in figure 5, an intervention for consolidating the layer underlying the surface foundation layer was carried out. The consolidation intervention may occur for example by providing a plurality of holes through the layer of the ground to be consolidated (i.e. the lower layer 5) and subsequently injecting an expanded resin for filling the holes, according to known techniques.

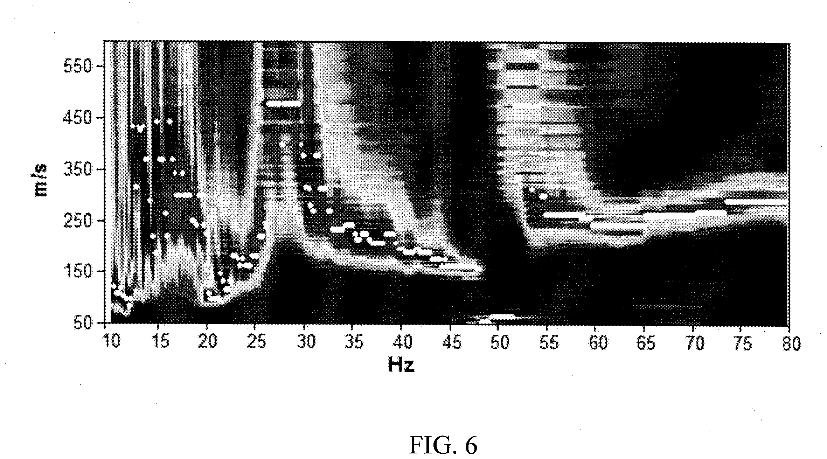

Figure 6 is the dispersion image obtained from recording the seismic traces after the consolidation intervention. Figure 6 shows the creation of a "channel" in which the waves not present in figure 5 travel, at a frequency between 30 and 45 Hz, i.e. an increase of rigidity in the layer in which the waves travel in this frequency range. As a matter of fact, it is observed that the maximum energy transfers both of the first and the second region are moved towards higher frequencies and velocities, with respect to the regions of maximum transfer of energy of figure 5. The points of maximum spectral power (white circles) for the first region extend now approximately from 30 to 45 Hz with phase velocity of about 200 m/s, while the points of maximum spectral power for the second region extend from about 55 to 100 Hz, with velocity of about 300 m/s. From a comparison of the image of figure 6 with an image of figure 5 it is concluded that the phase velocity for the first mode of the Love waves, associated with the deepest layer, is increased by about 30%. Both the velocity of the Rayleigh and Love surface waves is very close to that of the shear waves S, therefore the velocity value measured through the aforedescribed method represents, with good approximation, the value of the shear velocity Vs.

It is thus derived that the consolidation intervention has caused an increase of the shear velocity, in the lower layer, by about 30%.

The so-called inversion process allows to obtain a theoretical dispersion curve almost similar to the experimental dispersion curve, according to algorithms, per se known, for modelling of surface waves in multilayer systems. The calculation procedure thus allows to obtain, the profile of shear velocity, Vs, as a function of the depth, z. From the determination of the profile of shear velocity $V_s(z)$ the rigidity of the ground is obtained, and in particular the rigidity of layer underlying the foundations, $\mu$, given by the relation (1).

**Claims**

1. Method for determining the rigidity of a geological layer in terms of propagation velocity of the elastic waves within a geological system delimited by a free surface (2) and comprising at least one first geological layer (6) having a first rigidity and a thickness (s) and a second geological layer (5) having a second rigidity and being arranged below the first geological layer,
   wherein the first layer is delimited by the free surface and comprises the foundations of a building structure (1) and has a first rigidity value and the second layer has a second rigidity value, the first rigidity value being larger than the second rigidity value and said first and second layer being separated from each other by an interface (3), the method comprising the steps of:

   - positioning a source (4) within the second geological layer (5), whose rigidity is intended to be measured, the source being apt to generate seismic waves and being located at a depth (t), comprised between 0.1 m and 2 m from the interface (3);
   - activating said source of seismic waves;
   - detecting at least one seismic signal by means of an array of sensors (8) arranged coupled with the free surface and positioned on the free surface, wherein the array of sensors comprises a plurality of sensors (8a, ...,8j), wherein the at least one signal is a plurality of seismic signals and each sensor of the plurality is apt to detect a seismic signal of the plurality of seismic signals;
   - determining from the at least one seismic signal a shear velocity of the elastic waves in the second layer and thus indicative of the rigidity of the second layer, and
   - calculating the rigidity from the shear velocity of the elastic waves in the second layer.

2. Method according to claim 1, wherein the step of determining a shear velocity of the elastic waves in the second layer comprises the following steps:

- determining from at least one seismic signal the propagation velocity of the Rayleigh and Love surface waves coupled to Stoneley interface waves, the surface and interface waves being caused by the seismic waves generated by said source;
- determining a map of said propagation velocities of the surface waves as a function of the frequency thereof;
- identifying, in the velocities map, a propagation velocity whose frequency is correlated to a depth in the geological system, and
- correlating at least one propagation velocity identified in the velocities map to a shear velocity of the elastic waves in the second layer (5) and thus indicative of the rigidity of the second layer.

3. Method according to any one of the preceding claims, wherein the first geological layer is delimited by the free surface and comprises the foundations of a building structure (1).

4. Method according to any one of the preceding claims, wherein said source of seismic signal is an impulsive source suitable to generate body waves.

5. Method according to claim 2, wherein the step of detecting the plurality of seismic signals comprises positioning the array of sensors on the free surface and the step of determining the propagation velocity comprises determining, from the plurality of seismic signals, the propagation velocity of Rayleigh and Love surface waves coupled to the interface Stoneley waves.

6. Method according to claim 1, wherein the surface waves whose propagation velocity is detected are detected through a multichannel technique.

7. Method according to claims 2, wherein the step of detecting at least one seismic signal comprises detecting a signal as a function of the time during a period of acquisition and the step of determining a map of the propagation velocity of the surface waves comprises performing a transformation of the seismic signal from the time domain to the frequency domain.

8. The method according to claim 4, wherein the impulsive source comprises at least one explosive charge with initial velocity comprised between 300 and 700 m/s.

9. System for determining the rigidity of a geological layer in terms of propagation velocity of the elastic waves within a geological system delimited by a free surface (2) and comprising at least one first geological layer (6) having a first rigidity and a second geological layer (5) having a second rigidity and being arranged below the first geological layer, said layers being separated from each other by an interface (3), the system comprising
a source suitable to generate seismic waves;
an array of seismic signal sensors (8) comprising a plurality of sensors (8a, .., 8j), the plurality including a first (8a) and a last (8j) sensor, arranged coupled with the free surface, the array of sensors being positioned on the free surface, and
an electronic unit (18) for acquiring seismic signals detected by the at least one sensor,
wherein said source is positioned in the second geological layer at a depth (d) comprised between 0.1 m and 2.0 m from the interface (3), the first layer has a rigidity value larger than the rigidity value of the second layer, and the first layer is delimited by the free surface and comprises the foundations of a building structure (1).

10. System according to claim 9, wherein the sensors are aligned along an alignment direction and the source is positioned at a predetermined distance (D) from the first sensor of the linear array of sensors, defined along the alignment direction.

11. System according to any one of claims 9 and 10, wherein the source of seismic waves is energized by a depth seismic gun (10).

**Patentansprüche**

1. Methode zur Bestimmung der Steifigkeit einer geologischen Schicht im Hinblick auf die Ausbreitungsgeschwindigkeit der elastischen Wellen innerhalb eines von einer freien Oberfläche (2) begrenzten geologischen Systems und umfassend mindestens eine erste geologische Schicht (6) aufweisend eine erste Steifigkeit und eine Dicke (s), sowie eine unterhalb der ersten geologischen Schicht angeordnete zweite geologische Schicht (5) aufweisend eine zweite Steifigkeit,
wobei die erste Schicht durch die freie Oberfläche begrenzt ist und die Fundamente einer Gebäudestruktur (1) umfasst und einen ersten Steifigkeitswert aufweist, und
die zweite Schicht einen zweiten Steifigkeitswert aufweist, wobei der erste Steifigkeitswert größer als der zweite Steifigkeitswert ist und die erste und zweite Schicht durch eine Grenzfläche (3) voneinander getrennt sind, wobei die Methode folgende Schritte umfasst:

- Positionieren einer Quelle (4) innerhalb der zweiten geologischen Schicht (5), deren Steifigkeit gemessen werden soll, wobei die Quelle zur Erzeugung von seismischen Wellen geeignet ist und in einer Tiefe (t) zwischen 0.1 m und 2 m von der Grenzfläche (3) entfernt positioniert ist;
- Aktivieren der Quelle seismischer Wellen;
- Erfassen mindestens eines seismischen Signals mittels einer Sensorenanordnung (8), die mit der freien Oberfläche angekoppelt und auf der freien Oberfläche positioniert ist, wobei die Sensorenanordnung eine Vielzahl von Sensoren (8a, ...,8j) umfasst, wobei das mindestens eine Signal eine Vielzahl von seismischen Signalen ist und jeder dieser Vielzahl von Sensoren geeignet ist, ein seismisches Signal der Vielzahl von seismischen Signalen zu erfassen;
- Bestimmen, aus mindestens einem seismischen Signal, einer Schergeschwindigkeit der elastischen Wellen in der zweiten Schicht und somit kennzeichnend für die Steifigkeit der zweiten Schicht, und
- Berechnen der Steifigkeit aus der Schergeschwindigkeit der elastischen Wellen in der zweiten Schicht.

2. Methode nach Anspruch 1, wobei der Schritt des Bestimmens einer Schergeschwindigkeit der elastischen Wellen in der zweiten Schicht folgende Schritte umfasst:

- Bestimmen, aus mindestens einem seismischen Signal, der Ausbreitungsgeschwindigkeit von mit Stoneley-Schnittstellenwellen gekoppelten Rayleigh- und Love-Oberflächenwellen, wobei die Oberflächen- und Schnittstellenwellen durch die von der Quelle erzeugten seismischen Wellen verursacht werden;
- Bestimmen einer Karte der Ausbreitungsgeschwindigkeiten der Oberflächenwellen als Funktion ihrer Frequenz;
- Identifizieren einer Ausbreitungsgeschwindigkeit in der Geschwindigkeitskarte, deren Frequenz auf eine Tiefe im geologischen System bezogen ist, und
- Korrelieren mindestens einer in der Geschwindigkeitskarte identifizierten Ausbreitungsgeschwindigkeit mit einer Schergeschwindigkeit der elastischen Wellen in der zweiten Schicht (5) und somit kennzeichnend für die Steifigkeit der zweiten Schicht.

3. Methode nach irgendeinem der vorgehenden Ansprüche, wobei die erste geologische Schicht durch die freie Oberfläche begrenzt ist und die Fundamente einer Gebäudestruktur (1) umfasst.

4. Methode nach irgendeinem der vorgehenden Ansprüche, wobei die Quelle des seismischen Signals eine Impulsquelle ist, die zur Erzeugung von Körperwellen geeignet ist.

5. Methode nach Anspruch 2, wobei der Schritt des Erfassens der Vielzahl von seismischen Signalen das Positionieren der Sensorenanordnung auf der freien Oberfläche, und der Schritt des Bestimmens der Ausbreitungsgeschwindigkeit das Bestimmen der Ausbreitungsgeschwindigkeit von Rayleigh- und Love-Oberflächenwellen, die an die Stoneley-Grenzflächenwellen gekoppelt sind, aus der Vielzahl von seismischen Signalen umfasst.

6. Methode nach Anspruch 1, wobei die Oberflächenwellen, deren Ausbreitungsgeschwindigkeit erfasst wird, durch eine Mehrkanaltechnik erfasst werden.

7. Methode nach Anspruch 2, wobei der Schritt des Erfassens mindestens eines seismischen Signals das Erfassen eines Signals als eine Funktion der Zeit während einer Aufnahmeperiode umfasst und der Schritt des Bestimmens einer Karte der Ausbreitungsgeschwindigkeit von Oberflächenwellen das Durchführen einer Transformation des seismischen Signals vom Zeitbereich in den Frequenzbereich umfasst.

8. Methode nach Anspruch 4, wobei die Impulsquelle mindestens eine Sprengladung mit einer zwischen 300 und 700 m/s liegenden Anfangsgeschwindigkeit umfasst.

9. System zur Bestimmung der Steifigkeit einer geologischen Schicht im Hinblick auf die Ausbreitungsgeschwindigkeit der elastischen Wellen innerhalb eines von einer freien Oberfläche (2) begrenzten geologischen Systems und umfassend mindestens eine erste geologische Schicht (6) aufweisend eine erste Steifigkeit und eine unterhalb der ersten geologischen Schicht angeordnete zweite geologische Schicht (5) aufweisend eine zweite Steifigkeit, wobei die Schichten durch eine Grenzfläche (3) voneinander getrennt sind, und das System Folgendes umfasst:

eine Quelle, die zur Erzeugung seismischer Wellen geeignet ist;
eine Anordnung von seismischen Signalsensoren (8) umfassend eine Vielzahl von Sensoren (8a, .., 8j), wobei die Vielzahl einen ersten (8a) und einen letzten (8j) Sensor umfasst, die mit der freien Oberfläche gekoppelt angeordnet sind, wobei die Sensorenanordnung auf der freien Oberfläche positioniert ist; und eine elektronische Einheit (18) zur Aufnahme von seismischen Signalen, die durch den mindestens einen Sensor erfasst werden, wobei die Quelle in der zweiten geologischen Schicht in einer Tiefe (d) positioniert ist, die zwischen 0,1 m und 2,0 m von der Grenzfläche (3) liegt; die erste Schicht einen größeren Steifigkeitswert als der Steifigkeitswert der zweiten Schicht aufweist, und die erste Schicht durch die freie Oberfläche begrenzt ist und die Fundamente einer Gebäudestruktur (1) umfasst.

10. System nach Anspruch 9, wobei die Sensoren entlang einer Ausrichtungsrichtung ausgerichtet sind und die Quelle in einem vorbestimmten Abstand (D) von dem ersten Sensor der linearen Sensorenanordnung positioniert ist, die entlang der Ausrichtungsrichtung definiert ist.

11. System nach irgendeinem der Ansprüche 9 und 10, wobei die Quelle von seismischen Wellen durch eine seismische Unterwasserkanone (10) erregt wird.

**Revendications**

1. Procédé permettant la détermination de la rigidité d'une couche géologique en termes de vitesse de propagation des ondes élastiques à l'intérieur d'un système géologique délimité par une surface libre (2) et comprenant au moins une première couche géologique (6) ayant une première rigidité et une épaisseur (s) et une seconde couche géologique (5) ayant une seconde rigidité et étant agencée au-dessous de la première couche géologique, dans lequel la première couche est délimitée par la surface libre et comprend les fondations d'une structure de bâtiment (1) et possède une première valeur de rigidité et la seconde couche possède une seconde valeur de rigidité, la première valeur de rigidité étant supérieure à la seconde valeur de rigidité et lesdites première et seconde couches étant séparées l'une de l'autre par une interface (3), le procédé comprenant les étapes consistant à :

- positionner une source (4) à l'intérieur de la seconde couche géologique (5), dont la rigidité est destinée à être mesurée, la source étant apte à générer des ondes sismiques et étant située à une profondeur (t) comprise entre 0,1 m et 2 m par rapport à l'interface (3) ;
- activer ladite source d'ondes sismiques ;
- détecter au moins un signal sismique au moyen d'un réseau de capteurs (8) agencé en étant couplé à la surface libre et positionné sur la surface libre, dans lequel le réseau de capteurs comprend une pluralité de capteurs (8a, ..., 8j), dans lequel l'au moins un signal est une pluralité de signaux sismiques et chaque capteur de la pluralité est apte à détecter un signal sismique de la pluralité de signaux sismiques ;
- déterminer à partir de l'au moins un signal sismique une vitesse de cisaillement des ondes élastiques dans la seconde couche et qui est par conséquent indicative de la rigidité de la seconde couche, et
- calculer la rigidité à partir de la vitesse de cisaillement des ondes élastiques dans la seconde couche.

2. Procédé selon la revendication 1, dans lequel l'étape de détermination d'une vitesse de cisaillement des ondes élastiques dans la seconde couche comprend les étapes suivantes :

- déterminer à partir d'au moins un signal sismique la vitesse de propagation des ondes de surface de Rayleigh et de Love couplées à des ondes d'interface de Stoneley, les ondes de surface et d'interface étant provoquées par les ondes sismiques générées par ladite source ;
- déterminer une carte desdites vitesses de propagation des ondes de surface en fonction de leur fréquence ;
- identifier, dans la carte des vitesses, une vitesse de propagation dont la fréquence est corrélée avec une profondeur dans le système géologique, et
- mettre en corrélation au moins une vitesse de propagation identifiée dans la carte des vitesses avec une vitesse de cisaillement des ondes élastiques dans la seconde couche (5) et qui est par conséquent indicative de la rigidité de la seconde couche.

3. Procédé selon l'une quelconque des revendications précédentes, dans lequel la première couche géologique est délimitée par la surface libre et comprend les fondations d'une structure de bâtiment (1).

4. Procédé selon l'une quelconque des revendications précédentes, dans lequel ladite source de signal sismique est une source impulsive appropriée pour générer des ondes de volume.

5. Procédé selon la revendication 2, dans lequel l'étape de détection de la pluralité de signaux sismiques consiste à positionner le réseau de capteurs sur la surface libre et l'étape de détermination de la vitesse de propagation consiste à déterminer, à partir de la pluralité de signaux sismiques, la vitesse de propagation d'ondes de surface de Rayleigh et de Love couplées aux ondes de Stoneley d'interface.

6. Procédé selon la revendication 1, dans lequel les ondes de surface dont la vitesse de propagation est détectée sont détectées par une technique à canaux multiples.

7. Procédé selon la revendication 2, dans lequel l'étape de détection d'au moins un signal sismique consiste à détecter un signal en fonction du temps pendant une période d'acquisition et l'étape de détermination d'une carte de la vitesse de propagation des ondes de surface consiste à réaliser une transformation du signal sismique du domaine temporel au domaine fréquentiel.

8. Procédé selon la revendication 4, dans lequel la source impulsive comprend au moins une charge explosive ayant une vitesse initiale comprise entre 300 et 700 m/s.

9. Système permettant la détermination de la rigidité d'une couche géologique en termes de vitesse de propagation des ondes élastiques à l'intérieur d'un système géologique délimité par une surface libre (2) et comprenant au moins une première couche géologique (6) ayant une première rigidité et une seconde couche géologique (5) ayant une seconde rigidité et étant agencée au-dessous de la première couche géologique, lesdites couches étant séparées l'une de l'autre par une interface (3), le système comprenant
une source appropriée pour générer des ondes sismiques ;
un réseau de capteurs de signal sismique (8) comprenant une pluralité de capteurs (8a, ..., 8j), la pluralité incluant un premier (8a) et un dernier (8j) capteur, agencé en étant couplé à la surface libre, le réseau de capteurs étant positionné sur la surface libre, et
une unité électronique (18) pour acquérir des signaux sismiques détectés par l'au moins un capteur,
dans lequel ladite source est positionnée dans la seconde couche géologique à une profondeur (d) comprise entre 0,1 m et 2,0 m par rapport à l'interface (3), la première couche possède une valeur de rigidité supérieure à la valeur de rigidité de la seconde couche, et la première couche est délimitée par la surface libre et comprend les fondations d'une structure de bâtiment (1).

10. Système selon la revendication 9, dans lequel les capteurs sont alignés le long d'une direction d'alignement et la source est positionnée à une distance prédéterminée (D) du premier capteur du réseau linéaire de capteurs, définie le long de la direction d'alignement.

11. Système selon l'une quelconque des revendications 9 et 10, dans lequel la source d'ondes sismiques est excitée par un canon sismique en profondeur (10).

FIG. 1

FIG. 2

FIG. 3

FIG. 4

FIG. 5

FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2004226380 A
- WO 2004019063 A
- US 6094401 A
- WO 2008154640 A

### Non-patent literature cited in the description

- **C.B. PARK et al.** Multi-channel analysis of surface waves (MASW). *Geophysics,* 1999, vol. 64, 800-808